(19) Europäisches Patentamt

European Patent Office

Office européen des brevets

(11) **EP 1 576 268 B1**

(12) **EUROPÄISCHE PATENTSCHRIFT**

(45) Veröffentlichungstag und Bekanntmachung des Hinweises auf die Patenterteilung:
**28.06.2006 Patentblatt 2006/26**

(21) Anmeldenummer: **03757702.0**

(22) Anmeldetag: **09.10.2003**

(51) Int Cl.:
*F02D 41/02* (2006.01)  *F02D 41/06* (2006.01)
*F02D 41/00* (2006.01)  *F01N 3/20* (2006.01)
*F02D 13/02* (2006.01)

(86) Internationale Anmeldenummer:
**PCT/DE2003/003345**

(87) Internationale Veröffentlichungsnummer:
**WO 2004/055347 (01.07.2004 Gazette 2004/27)**

(54) **VERFAHREN ZUM AUFHEIZEN EINES ABGASKATALYSATORS EINER MIT KRAFTSTOFF-DIREKTEINSPRITZUNG ARBEITENDEN BRENNKRAFTMASCHINE**

METHOD FOR HEATING AN EXHAUST GAS CATALYST FOR AN INTERNAL COMBUSTION ENGINE OPERATING WITH DIRECT FUEL INJECTION

PROCEDE POUR CHAUFFER UN CATALYSEUR D'UN MOTEUR A COMBUSTION INTERNE A INJECTION DIRECTE DE CARBURANT

(84) Benannte Vertragsstaaten:
**DE FR GB IT**

(30) Priorität: **17.12.2002 DE 10259052**

(43) Veröffentlichungstag der Anmeldung:
**21.09.2005 Patentblatt 2005/38**

(73) Patentinhaber: SIEMENS
**AKTIENGESELLSCHAFT**
**80333 München (DE)**

(72) Erfinder:
• **ZHANG, Hong**
 **93105 Tegernheim (DE)**
• **BEER, Johannes**
 **93047 Regensburg (DE)**

(56) Entgegenhaltungen:
**EP-A- 1 243 779**  **DE-A- 3 506 235**
**DE-A- 10 002 483**  **DE-A- 10 250 121**
**FR-A- 2 781 011**  **US-A- 5 881 552**
**US-B1- 6 192 678**

**Beschreibung**

Die Erfindung betrifft ein Verfahren zum Aufheizen eines Abgaskatalysators einer mit einer Aufladevorrichtung versehenen und mit Kraftstoffdirekteinspritzung arbeitenden Brennkraftmaschine, die einen variablen Ventiltrieb aufweist.

Brennkraftmaschinen mit Direkteinspritzung (DI, direct injection) beinhalten ein großes Potential zur Reduktion des Kraftstoffverbrauches bei relativ geringem Schadstoffausstoß. Im Gegensatz zur Saugrohreinspritzung wird bei einer Direkteinspritzung Kraftstoff mit hohem Druck direkt in die Verbrennungsräume der Brennkraftmaschine eingespritzt.

Hierzu sind Einspritzsysteme mit zentralem Druckspeicher (Common-Rail) bekannt. In solchen Common-Rail-Systemen wird mittels einer Hochdruckpumpe ein vom elektronischen Steuergerät der Brennkraftmaschine über Drucksensor und Druckregler geregelter Kraftstoffdruck in der Verteilerleiste (Common-Rail) aufgebaut, der weitgehend unabhängig von Drehzahl und Einspritzmenge zur Verfügung steht. Über einen elektrisch ansteuerbaren Injektor wird der Kraftstoff in den Brennraum eingespritzt. Dieser erhält seine Signale von dem Steuergerät. Durch die funktionelle Trennung von Druckerzeugung und Einspritzung kann der Einspritzdruck unabhängig vom aktuellen Betriebspunkt der Brennkraftmaschine weitgehend frei gewählt werden.

Es ist bekannt, zur Leistungs- und Drehmomentsteigerung von Brennkraftmaschinen eine Aufladevorrichtung vorzusehen, welche die Ladungsmenge durch Vorverdichtung vergrößert. Dabei fördert ein Lader die Frischluft in den oder die Zylinder der Brennkraftmaschine. Bei der mechanischen Aufladung wird der Verdichter direkt von der Brennkraftmaschine angetrieben (z.B. Kompressoraufladung), während bei einer Abgasturboaufladung eine mit dem Abgas der Brennkraftmaschine beaufschlagte Turbine einen im Ansaugtrakt der Brennkraftmaschine liegenden Verdichter antreibt.

Moderne Brennkraftmaschinen weisen zur Senkung der Ladungswechselverluste variable Ventiltriebe mit ein- und mehrstufiger oder stufenloser Variabilität auf. Die variable Ventilsteuerung der Ein- und Auslassventile bietet die Möglichkeit die Ventilsteuerzeiten innerhalb der physikalischen Grenzen des vorhandenen Aktuatorprinzips (mechanisches System, hydraulisches System, elektrisches System, pneumatisches System oder eine Kombination der genannten Systeme) mehr oder weniger frei einzustellen. Mit solchen Systemen lässt sich die Ventilüberschneidung einstellen. Sie werden auch als VVT-Systeme (Variable Valve Timing) oder als IVVT -Systeme (Infinitely Variable Valve Timing) bezeichnet. Mittels variabler Ventilsteuerungen kann darüber hinaus auch der Ventilhub eingestellt werden. Solche Systeme werden auch als VVL-Systeme (Variable Valve Lift) bezeichnet.

Mit Hilfe der variablen Ventiltriebe können Verbrauchseinsparungen, niedrigere Rohemissionen und ein höheres Drehmoment erreicht werden.

Die Schadstoffemission einer Brennkraftmaschine lässt sich durch katalytische Nachbehandlung des Abgases mit Hilfe eines Abgaskatalysators in Verbindung mit einer LambdaRegelungseinrichtung wirksam verringern. Eine wichtige Voraussetzung hierfür ist aber, dass neben der Lambdasonde der Lambdaregelungseinrichtung auch der Katalysator seine Anspringtemperatur (Light-Off-Temperatur) erreicht hat. Unterhalb dieser Temperatur ist der Abgaskatalysator wenig bis unwirksam und die Reaktion findet nur mit ungenügend kleinen Konvertierungsraten statt.

Um ein schnelles Erreichen der Light-Off-Temperatur sicherzustellen, und damit den Schadstoffausstoß während der Kaltstartphase der Brennkraftmaschine, bei der innerhalb der ersten 10-20 Sekunden ca. 50 bis 90% der gesamten Schadstoffe ausgestoßen werden, dennoch zu verringern, sind verschiedene Warmlaufstrategien bekannt.

Bei Systemen mit Abgasturboaufladung ist aufgrund der Wärmesenke durch die Abgasturbine das emissionsoptimale Erreichen des Katalysator-Light-Offs kritisch. Häufig werden Sekundärluftsysteme eingesetzt um die Kaltstartemissionen zu begrenzen.

Dabei wird beispielsweise mittels einer Sekundärluftpumpe während des Warmlaufs Sekundärluft nahe an den Auslassventilen eingeblasen. Durch die Reaktion der eingeblasenen Luft mit den in den heißen Abgasen enthaltenen unverbrannten Abgasbestandteilen und die weitere Oxidation im Katalysator wird dieser schneller aufgeheizt.

In der DE 44 41 164 A1 wird eine Vorrichtung zur Steuerung des Ladeluftstromes für eine aufgeladene Brennkraftmaschine beschrieben, bei der die Sekundärluft nicht mittels einer separaten Sekundärluftpumpe gefördert, sondern vom zur Förderung und Verdichten der Ladeluft ohnehin vorhandenen Lader bereitgestellt wird. Die Ladeluft wird über eine Ladeluftleitung zur Brennkraftmaschine gefördert, wobei in dieser Ladeluftleitung eine Drosselklappe angeordnet ist. Stromaufwärts der Drosselklappe und stromabwärts des Laders zweigt eine Umluftleitung zur Saugseite des Laders ab. In der Umluftleitung ist ein Umluftsteller angeordnet. Eine Verbindungsleitung führt von der Druckseite des Laders zu einer Abgasleitung der Brennkraftmaschine, wobei in dieser Verbindungsleitung ein mit einem Motorsteuergerät verbundenes Regelventil angeordnet ist. Um in einem breiten Betriebsbereich der Brennkraftmaschine eine optimale Zugabe von Sekundärluft zum Erreichen von bestmöglichen Abgaswerten zu realisieren, wird vorgeschlagen, dass die Abzweigung der Verbindungsleitung in der Ladeluftleitung stromaufwärts der Umluftleitung angeordnet ist.

Aus der DE 44 45 779 A1 ist ein Verfahren zur Steuerung einer Mehrzylinderbrennkraftmaschine in der Kaltstart- und Warmlaufphase bekannt. Der Gasladungswechsel in den einzelnen Zylindern dieser Brennkraftmaschine erfolgt über Einlassvorrichtungen zumindest für die Luft und Auslassvorrichtungen für das Abgas, die unabhängig voneinander aber mit aufeinander abstimmbaren Öffnungszeiten und Schließzeiten ansteuerbar sind. Beginnend in der Kaltstartphase bis in die Warmlaufphase erfolgt die Zufuhr von Kraftstoff nur zu einem Teil der Zylinder und die Zufuhr von Kraftstoff zum anderen Teil der Zylinder wird abgeschaltet, die dann als Verdichter arbeiten und die in diesen Zylindern durch den Kompressionsvorgang aufgeheizte Luftmenge über die Auslassvorrichtung in das Abgassystem zur Nachreaktion der Abgase eingeleitet wird.

Der Erfindung liegt die Aufgabe zugrunde, ein Verfahren anzugeben, mit dem der Abgaskatalysator einer mit Aufladung betriebenen und mit Kraftstoffdirekteinspritzung arbeitenden, einen variablen Ventiltrieb aufweisenden Brennkraftmaschine mit einfachen Mitteln effizient aufgeheizt werden kann.

Diese Aufgabe wird durch ein Verfahren gelöst, wie es in Anspruch 1 angegeben ist.

Vorteilhafte Weitergestaltungen des erfindungsgemäßen Verfahrens bilden den Gegenstand der Unteransprüche.

Eine aufgeladene, mit homogenem Gemisch betriebene DI-Otto-Brennkraft maschine bietet im volllastnahen Betrieb die Möglichkeit Frischluft direkt in den Abgastrakt zu spülen. Voraussetzung dazu sind ein positives Druckgefälle zwischen Ein- und Auslassseite zum Zeitpunkt des Ladungswechsels OT (Oberer Totpunkt),sowie eine ausreichende Ventilüberschneidung zwischen Auslass- und Einlassventil. Die Ventilüberschneidung lässt sich beispielsweise über ein stufenlos verstellbares System (IVVT-System, Infinitely Variable Valve Timing) oder über ein in Stufen verstellbares System (VVT-System, Variable Valve Timing) einstellen.

Durch die direkte Einspritzung von Kraftstoff in den Brennraum ist sichergestellt, dass der Beginn der Einspritzung nach dem Schließen des Auslassventils erfolgt. Es wird so nur Frischluft ohne Kraftstoff zur Abgasseite gespült.

Durch die zusätzliche Spülluft wird bei einer Brennkraftmaschine mit Abgasturbolader der Luftmassenstrom durch die Turbine erhöht, wodurch sich einerseits das transiente Verhalten und auch die erzielbare Maximalleistung erhöht. Anderseits stimmt durch die zusätzliche Spülluft das im Abgas gemessene Lambda $\lambda_{Ex}$ nicht mehr mit dem Verbrennungslambda $\lambda_{Cyl}$ im Zylinder überein. Wird das Abgaslambda $\lambda_{Ex}$ mittels Lambdaregelung auf $\lambda_{Ex} = 1$ gehalten, so ergibt sich ein Verbrennungslambda $\lambda_{Cyl} < 1$. Die Verbrennung des fetten Gemisches im Zylinder verursacht einen hohen CO- und HC-Anteil im Abgas. In Verbindung mit dem hohen Restsauerstoffgehalt - bedingt durch den Spülluftanteil-, resultieren optimale Reaktionsbedingungen im Abgaskatalysator, welcher sich stromab der Turbine des Abgasturboladers befindet.

Das Verfahren lässt sich in bisher geschilderter Form nicht zum Katalysatorheizen aus Kaltstartbedingungen verwenden, da eine Last größer Saugervolllast unmittelbar nach dem Start der Brennkraftmaschine kaum auftritt. Solch eine Betriebsweise ist zudem nicht relevant für die verwendeten Abgastestzyklen (MVEG, FTP75).

Durch eine zusätzliche VVL (Variable Valve Lift) Funktionalität kann unter Kaltstartbedingungen auf einen geringen Ventilhub geschaltet werden. Durch den geringen Ventilhub verringert sich - bei konstantem Saugrohrdruck - die der Brennkraftmaschine zugeführte Frischluftmenge erheblich. Ausgleich schafft ein Anheben des Saugrohrdruckniveaus durch vollständiges Öffnen der Drosselklappe und Vorverdichtung der Ladung mittels Aufladung. In dieser Weise wird das für den Spülvorgang erforderliche positive Druckgefälle auch unter Startbedingungen realisiert und die Light-Off Temperatur des Abgaskatalysators wird schneller erreicht.

Der Hauptvorteil der Erfindung liegt im Entfall der Sekundärluftpumpe, den zugehörigen Ventilen sowie den Leitungsführungen.

Im volllastnahen Betrieb einer aufgeladenen Brennkraftmaschine bewirkt eine positive Druckdifferenz zwischen Einlass- und Auslassseite in Kombination mit einer entsprechenden Ventilüberschneidung VO, dass Frischluft zur Abgasseite gespült wird. Die Spülluftmenge erhöht den Durchsatz durch den Motor ohne an der Verbrennung teilzunehmen. Es treten insbesondere folgende Vorteile für das Betriebsverhalten auf:

- Bei einem Lambdawert im Abgas $\lambda_{Ex} = 1$ findet bei Spülluft eine Verbrennung im Zylinder mit einem Lambdawert $\lambda_{Cyl} < 1$ statt. Durch die Verbrennung im Fetten wird die Klopfneigung reduziert.

- $\lambda_{Cyl} < 1$ bewirkt einen sehr hohen CO- und HC-Anteil im Abgas. Gleichzeitig sorgt der Spülluftanteil für einen hohen Restsauerstoffgehhalt und bewirkt so einen internen Sekundärlufteffekt. Die resultierende Abgaszusammensetzung bewirkt eine hohe Exothermie im Abgaskatalysator und beschleunigt so das Aufheizverhalten.

- Durch Spülen wird der Restgasanteil im Brennraum und somit die Klopfneigung vermindert. Die Minimierung des Restgasanteils ist an der Volllast von entscheidender Bedeutung um eine maximale Zylinderfüllung zu erreichen und diese Füllung auch effektiv, d. h. mit günstiger Verbrennungsschwerpunktlage umzusetzen.

- Die zusätzliche Spülluftmenge erhöht den Massenstrom durch die Turbine, wodurch bei niedrigen Motordrehzahlen sowohl das Ansprecherhalten, als auch die erreichbare Maximalleistung gesteigert werden können.

Das Verhältnis der im Zylinder verbleibenden Luftmasse zur gesamten während eines Arbeitsspiels angesaugten Luftmasse wird als Trapping Efficiency, TE bezeichnet:

$$TE = \frac{LuftmasseZylinder}{GesamteangesaugteLuftmasse} = \frac{M_{Cyl}}{M_{Cyl} + M_{Scav}} \qquad (1)$$

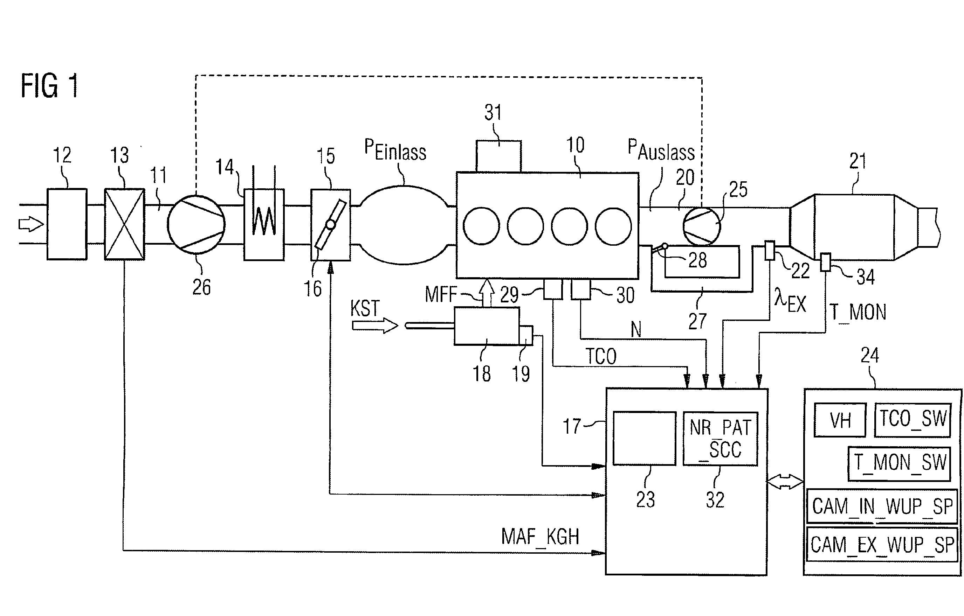

Die gesamte angesaugte Luftmasse setzt sich zusammen aus der Luftmasse $M_{Cyl}$, die im Zylinder verbleibt und der Spülluftmasse $M_{Scav}$, also derjenigen Luftmasse, die durch den Zylinder gespült wird. Aus dem Zusammenhang (1) folgt, dass $TE \leq 1$ ist. Je größer die Spülluftmasse $M_{Scav}$ ist, desto kleiner ist der Wert für die Trapping Efficiency TE. D.h. der Luftmassenmesser 13 (Fig. 1) misst die gesamte Luftmasse, die insgesamt angesaugt wird, die sich dann aber aufteilt über die Trapping Efficiency TE in eine Luftmasse, die an der Verbrennung teilnimmt und in eine Luftmasse, die durch die Brennkraftmaschine durchgespült wird.

Bei einem IVVT-System (stufenlose Verstellung der Nockenwellenposition) lässt sich TE über die Einlass- und Auslass-Nockenwellenposition stufenlos zwischen einem Minimalwert (maximale Spülluft) und dem Wert 1 (keine Spülluft, Mscav = 0) verstellen.

Das im Abgas gemessene Lambda $\lambda_{Ex}$ stimmt, aufgrund der nicht an der Verbrennung teilnehmenden Spülluftmasse $M_{Scav}$, nicht mit dem Verbrennungslambda $\lambda_{Cyl}$ überein. Es gilt folgender Zusammenhang:

$$TE \bullet \lambda_{Ex} = \lambda_{Zyl} \qquad (2)$$

.

Durch den Lambdawert $\lambda_{EX} = 1$, der mittels der Lambaaregelungseinrichtung eingestellt wird und einer Trapping Efficiency TE <1 (positives Spülgefälle, Ventilüberschneidung >0) ergibt sich ein $\lambda_{Cyl} = 1$. Dadurch findet keine vollständige Verbrennung des Kraftstoffs im Brennraum statt. Im Abgas tritt so eine hohe CO- und HC-Konzentration auf. Durch den Spülluftanteil im Abgas herrschen ideale Bedingungen für eine Nachreaktion im Abgaskatalysator. Die hohen Konzentrationen der unverbrannten Kraftstoffbestandteile zusammen mit dem hohen Restsauerstoffgehalt führen zu einer starken Exothermie im Abgaskatalysator. Die Monolithtemperatur des Abgaskatalysators kann dadurch in kritische Bereiche ansteigen.

Das erfindungsgemäße Verfahren wird nachfolgend anhand eines Beispiels näher erläutert. Es zeigt:

Figur 1    ein stark vereinfachtes Blockschaltbild einer aufgeladenen und mit Kraftstoffdirekteinspritzung arbeitenden Brennkraftmaschine mit variablen Ventiltrieb, bei der das erfindungsgemäße Verfahren angewandt wird und

Figur 2    ein Flussdiagramm, das eine Ausführungsform des erfindungsgemäßen Verfahrens veranschaulicht.

In Figur 1 ist in Form eines Blockschaltbildes eine aufgeladene Otto-Brennkraftmaschine 10 mit Kraftstoffdirekteinspritzung und einer ihr zugeordneten Abgasnachbehandlungsanlage gezeigt. Dabei sind nur diejenigen Komponenten dargestellt, die für das Verständnis der Erfindung notwendig sind. Insbesondere ist auf die Darstellung der Zündanlage, des Kraftstoffkreises und des Kühlkreislaufes verzichtet worden.

Über einen Ansaugkanal 11 erhält die Brennkraftmaschine 10 die zur Verbrennung notwendige Frischluft. Die zugeführte Frischluft strömt durch einen Luftfilter 12, einen Luftmassenmesser 13 und einen Ladeluftkühler 14 zu einem Drosselklappenblock 15. Der Drosselklappenblock 15 beinhaltet eine Drosselklappe 16 und einen nicht dargestellten Drosselklappensensor, der ein dem Öffnungswinkel der Drosselklappe 16 entsprechendes Signal abgibt. Bei der Drosselklappe 16 handelt es sich beispielsweise um ein elektromechanisch angesteuertes Drosselorgan (E-Gas), dessen Öffnungsquerschnitt neben der Betätigung durch den Fahrer (Fahrerwunsch) abhängig vom Betriebsbereich der Brennkraftmaschine über entsprechende Signale einer Steuerungseinrichtung 17 einstellbar ist. Der Luftmassenmesser 13 dient bei einer sogenannten luftmassengeführten Steuerung der Brennkraftmaschine als Lastsensor, dessen Ausgangssignal MAF_KGH zur weiteren Verarbeitung der Steuerungseinrichtung 17 zugeführt wird.

Die Brennkraftmaschine 10 weist eine Kraftstoffzumesseinrichtung 18 auf, der Kraftstoff KST unter hohem Druck zugeführt wird und die eine der Zylinderanzahl der Brennkraftmaschine entsprechende Anzahl von Einspritzventilen beinhaltet, welche über entsprechende Signale von Einspritzendstufen angesteuert werden, die vorzugsweise in der elektronischen Steuerungseinrichtung 17 der Brennkraftmaschine integriert sind. Über die Einspritzventile wird Kraftstoff direkt in die Zylinder der Brennkraftmaschine 10 eingespritzt. Die Einspritzventile werden dabei in vorteilhafter Weise aus einem Kraftstoffdruckspeicher (Common Rail) mit Kraftstoff versorgt. Die von einem Einspritzventil eingespritzte Kraftstoffmenge ist mit MFF bezeichnet. Ein Drucksensor 19 an der Kraftstoffzumesseinrichtung 18 erfasst den Kraftstoffdruck FUP, mit dem der Kraftstoff direkt in die Zylinder der Brennkraftmaschine eingespritzt wird.

Ausgangsseitig ist die Brennkraftmaschine 10 mit einem Abgaskanal 20 verbunden, in dem ein Abgaskatalysator 21 angeordnet ist. Dabei kann ein Dreiwege-Katalysator oder ein NOx-Speicherkatalysator oder eine Kombination der beiden vorgesehen sein. Die Sensorik für die Abgasnachbehandlung beinhaltet u.a. einen stromaufwärts des Abgaskatalysators 21 angeordneten Abgasmessaufnehmer in Form einer Lambdasonde 22.

Die Temperatur des Abgaskatalysators 21, genauer gesagt die Monolithtemperatur T_MON des Abgaskatalysators wird vorzugsweise mittels eines beliebigen, bekannten Abgastemperaturmodells aus verschiedenen Eingangsgrößen berechnet, wie es beispielsweise in der DE 198 36 955 A1 beschrieben ist. Das

Alternativ hierzu kann die Monolithtemperatur auch mit Hilfe eines Temperatursensors 34 erfasst werden, der in Strömungsrichtung des Abgases gesehen im vorderen Teil des Abgaskatalysators 21 angeordnet ist. Das Signal T_MON wird der Steuerungseinrichtung 17 zur weiteren Verarbeitung zugeführt.

Mit dem Signal $\lambda_{Ex}$ der Lambdasonde 22 wird das Gemisch entsprechend der Sollwertvorgaben geregelt. Diese Funktion übernimmt eine an sich bekannte Lambdaregelungseinrichtung 23, die vorzugsweise in die, den Betrieb der Brennkraftmaschine steuernde bzw. regelnde Steuerungseinrichtung 17 integriert ist. Solche elektronischen Steuerungseinrichtungen 17, die in der Regel einen oder mehrere Mikroprozessoren beinhalten und die neben der Kraftstofffeinspritzung und der Zündungsregelung noch eine Vielzahl weiterer Steuer- und Regelaufgaben übernehmen, sind an sich bekannt, so dass im folgenden nur auf den im Zusammenhang mit der Erfindung relevanten Aufbau und dessen Funktionsweise eingegangen wird. Insbesondere ist die Steuerungseinrichtung 17 mit einer Speichereinrichtung 24 verbunden, in der u.a. verschiedene Kennfelder und Schwellenwerte gespeichert sind, deren Bedeutung noch erläutert wird.

Zur Erhöhung der Zylinderfüllung und damit zur Leistungssteigerung der Brennkraftmaschine 10 ist eine Aufladevorrichtung in Form eines an sich bekannten Abgasturboladers vorgesehen, dessen Turbine 25 im Abgaskanal 20 angeordnet ist und die über eine in der Figur strichliniert dargestellte, nicht näher bezeichnete Welle mit einem Verdichter 26 im Ansaugkanal 11 in Wirkverbindung steht. Somit treiben die Abgase die Turbine 25 und diese wiederum den Verdichter 26 an. Der Verdichter 26 übernimmt das Ansaugen und liefert der Brennkraftmaschine 10 eine vorverdichtete Frischladung. Der stromabwärts des Verdichters 26 liegende Ladeluftkühler 14 führt die Verdichtungswärme über den Kühlmittelkreislauf der Brennkraftmaschine 10 ab. Dadurch kann die Zylinderfüllung weiter verbessert werden. Parallel zu der Turbine 25 ist eine Umgehungsleitung (Bypassleitung) 27 vorgesehen, die über ein sogenanntes Wastegate 28 unterschiedlich weit geöffnet werden kann. Hierdurch wird ein unterschiedlich großer Teil des Massenstroms aus der Brennkraftmaschine an der Turbine 25 vorbeigeleitet, so dass der Verdichter 26 des Abgasturboladers unterschiedlich stark angetrieben wird.

Ein Temperatursensor 29 erfasst ein der Temperatur der Brennkraftmaschine entsprechendes Signal, in der Regel die Kühlmitteltemperatur TCO. Ein Drehzahlsensor 30 erfasst die Drehzahl N der Brennkraftmaschine. Beide Signale werden der Steuerungseinrichtung 17 zur weiteren Verarbeitung zugeführt.

Ferner weist die Brennkraftmaschine 10 eine Einrichtung 31 auf, mit deren Hilfe sowohl die Ventilüberschneidung der Einlassventile und der Auslassventile, als auch die Ventilhübe eingestellt und geändert werden kann. Solche variable Ventilsteuerungen können mit mechanischen Systemen, hydraulischen Systemen, elektrischen Systemen, pneumatischen Systemen oder durch eine Kombination der genannten Systeme realisiert werden. Dabei kann zwischen sogenannten vollvariablen (stufenlosen) Ventiltrieben und Systemen mit in Stufen einstellbaren Ventiltrieben unterschieden werden.

Zur Abschaltung einzelner Zylinder der Brennkraftmaschine weist die Steuerungseinrichtung 17 eine Einrichtung 32 auf, mit deren Hilfe die Kraftstoffzuführung zu einzelnen Zylindern der Brennkraftmaschine nach einem vorgegebenen Abschaltmuster, den sogenannten Abschaltpattern NR_PAT_SCC abgeschaltet und wieder frei gegeben wird. Eine solche Einrichtung ist beispielsweise in der EP 0 614 003 B1 beschrieben. Durch die Kraftstoffabschaltung für einzelne Zylinder werden die "gefeuerten" Zylinder höher ausgelastet, wodurch Gütegrad der Verbrennung und Gaswechselwirkungsgrad verbessert werden.

Die zur Verbrennung nötige Kraftstoffeinspritzmenge MFF wird in herkömmlicher Weise aus einem Lastparameter, nämlich der angesaugten Luftmasse MAF_KGH und der Drehzahl N berechnet und mehreren Korrekturen (Temperatureinfluss, Lambdaregler, usw.) unterworfen.

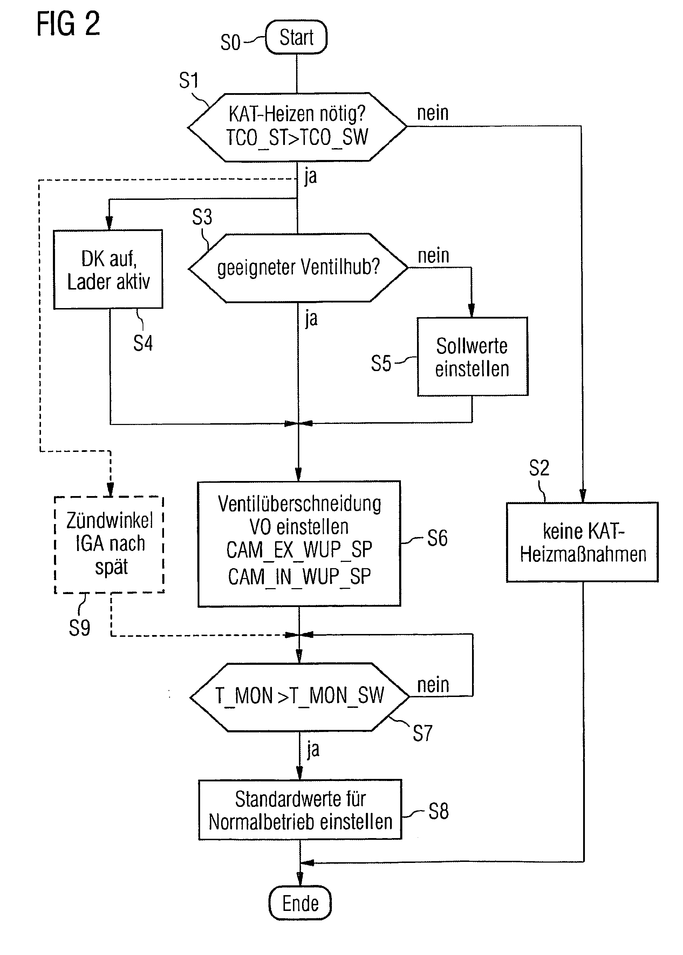

Das erfindungsgemäße Verfahren zum Aufheizen des Abgaskatalysators mittels der Spülluft wird nun anhand der Figur 2 erläutert.

Das Verfahren beginnt beim Verfahrensschritt S0, sobald die Brennkraftmaschine 10 gestartet wird. Der Abgaskatalysator 21 kann die entstehenden Schadstoffe erst mit Erreichen der Light-Off-Temperatur konvertieren. Diese Temperatur gibt für jeden Schadstoff an, ab welcher Monolithtemperatur 50% des dem Katalysator zugeführten Schadstoffes konvertiert wird. Durch eine Verminderung der Light-Off-Zeit kann unter Berücksichtigung der bis zu diesem Zeitpunkt zugeführten Schadstoffmenge, die während des Kaltstartvorgangs freigesetzte Schadstoffmenge reduziert werden.

In einem Verfahrensschritt S1 wird deshalb abgefragt, ob eine Beheizung des Abgaskatalysators 21 überhaupt nötig ist.

Das Vorliegen eines Kaltstartvorgangs wird typischerweise in erster Näherung erkannt, wenn die Kühlmitteltemperatur TCO_ST beim Start der Brennkraftmaschine einen Schwellenwert TCO_SW unterschreitet. Der Schwellenwert TCO_SW wird experimentell ermittelt und ist in der Speichereinrichtung 24 abgelegt.

Da die Brennkraftmaschine in der Regel langsamer abkühlt als der Abgaskatalysator, kann es vorkommen, dass zwar für das Kühlmittel der Brennkraftmaschine noch eine Temperatur von beispielsweise 80°C gemessen wird, was auf eine warme Brennkraftmaschine schließen würde, die Temperatur des Abgaskatalysators aber bereits weit unter seine Light-Off-Temperatur gesunken ist. Wird nun das Signal des Kühlmitteltemperatursensors als alleiniges Kriterium für das Aktivieren bzw. Nichtaktivieren von Maßnahmen zum Heizen des Abgaskatalysators herangezogen, so kann es u.U. zu erhöhtem Schadstoffausstoß nach dem Start der Brennkraftmaschine kommen. Es ist deshalb zweckmäßig, neben der Kühlmitteltemperatur auch die Abstellzeit der Brennkraftmaschine und/oder die Umgebungstemperatur zu berücksichtigen. Dies kann in vorteilhafter Weise über ein an sich bekanntes Abkühlungsmodell für den Abgaskatalysator erfolgen. Es ist auch möglich, die Monolithtemperatur des Abgaskatalysators mittels eines direkt an dem Abgaskatalysators angeordneten Temperatursensors zu erfassen.

Die Brennkraftmaschine wird ab dem frühestmöglichen Zeitpunkt durch die Lambdaregelung mit einem Lambdawert im Abgas $\lambda_{Ex} = 1$ betrieben. Vor der Betriebsbereitschaft der Lambdasonde wird $\lambda_{Ex} = 1$ über eine entsprechende Vorsteuerung der Einspritzmenge erreicht.

Ergibt die Abfrage in Verfahrensschritt S1, dass der Abgaskatalysator 21 seine Light-Off-Temperatur bereits erreicht hat, so werden keine Heizmaßnahmen für den Abgaskatalysator eingeleitet (Verfahrensschritt S2) und das Verfahren ist zu Ende.

Liefert die Abfrage in Verfahrensschritt S1 ein positives Ergebnis, d.h. der Abgaskatalysator 21 hat seine Light-Off-Temperatur noch nicht erreicht, so wird in einem Verfahrensschritt S3 überprüft, ob ein geeigneter Ventilhub, nämlich ein vorgegebenen Sollwert VH der Einlass- und der Auslassventile zum Spülen und damit zum Aufheizen des Abgaskatalysators 21 eingestellt ist. Der Wert für den Ventilhub VH wird experimentell ermittelt und ist in der Speichereinrichtung 24 abgelegt. Ist der Sollwert für den Ventilhub VH bereits eingestellt, so wird zum Verfahrensschritt S6 verzweigt, andernfalls wird im Verfahrensschritt S5 dieser Sollwert eingestellt.

Mittels VVL (variable valve lift) Funktionalität, wird also bei Start auf einen geringen Ventilhub VH geschaltet. Durch den geringen Ventilhub verringert sich - bei konstantem Saugrohrdruck-, die der Brennkraftmaschine zugeführte Frischluftmenge. Dieses Füllungsdefizit wird über Anheben des Saugrohrdruckniveaus durch vollständiges Öffnen der Drosselklappe 16 und Vorverdichtung der Ladung mittels Aufladung ausgeglichen (Verfahrensschritt S4), d.h diese Vorgänge laufen parallel ab. In dieser Weise wird das für den Spülvorgang erforderliche positive Druckgefälle unter Startbedingungen realisiert.

Im Verfahrensschritt S6 werden die IVVT-Sollwerte CAM_EX_WUP_SP und CAM_IN_WUP_SP für Einlass- und Auslassverstellung und die daraus resultierende Ventilüberschneidung VO für den Heizbetrieb des Abgaskatalysators nach folgender Bedingung gewählt:

Die resultierende Trapping Efficiency TE und das bei $\lambda_{Ex} = 1$ definierte $\lambda_{Cyl}$, ergibt die für den Aufheizvorgang optimale CO-, HC-Abgaskonzentration und Restsauerstoffgehalt.

$$CAM\_EX\_SP = CAM\_EX\_WUP\_SP$$
$$CAM\_IN\_SP = CAM\_IN\_WUP\_SP \qquad (4)$$

Dies bedeutet, dass als Sollwert CAM_EX_SP für das Auslassventil ein Wert CAM_EX_WUP_SP und als Sollwert für das Einlassventil ein Wert CAM_IN_WUP_SP gewählt wird. Diese Werte sind je in einem Kennfeld abhängig von der angesaugten Luftmasse MAF_KGH, der Drehzahl N und der Monolithtemperatur T_MON in der Speichereinrichtung 24 abgelegt.

Ein IVVT -Lageregler der Einrichtung 31 stellt die aktuelle Einlass- und Auslass-Nockenwellenposition CAM_EX, CAM_IN auf die vorgegebenen Sollwerte ein. Aus den gemessenen tatsächlichen Positionen CAM_EX, CAM_IN resultiert die aktuelle Ventilüberschneidung VO.

Als unterstützende Aufheizmaßnahme kann die Abgastemperatur durch Spätverstellung des Zündwinkels IGA angehoben werden, wodurch über die gesteigerte Abgastemperatur am Katalysatoreintritt die Light-Off-Zeit zusätzlich vermindert wird. Dies ist in der Figur 2 mit strichlinierter Darstellung als Verfahrensschritt S9 eingezeichnet.

Im Verfahrensschritt S7 wird überprüft, ob die Monolithtemperatur T_MON einen vorgegebenen Schwellenwert T_MON_SN, der in erster Linie von den konstruktiven Eigenschaften des verwendeten Materials abhängt, (typischerweise 250-300°C) überschritten hat.

Diese Abfrage wird solange wiederholt, bis die Monolithtemperatur T_MON den Schwellenwert T_MON_SW überschritten hat (Warteschleife).

Die Monolithtemperatur T_MON wird vorzugsweise in Abhängigkeit von Betriebskenngrößen der Brennkraftmaschine über ein Temperaturmodell bestimmt:

$$T\_MON = T\_MON(N, MAF\_KGH, IGA, \lambda_{Ex}, VS, TCO, NR\_PAT\_SCC, TE) \qquad (5)$$

Eingangsgrößen für das Temperaturmodell sind beispielsweise einzelne, alle oder Kombinationen folgender Größen:

die Drehzahl N, die angesaugte Luftmasse MAF_KGH, der Zündwinkel IGA, der Lambda-Wert im Abgas $\lambda_{Ex}$, die Fahrzeuggeschwindigkeit (wegen Fahrtwindkühlung), die Kühlmitteltemperatur, das Abschaltmuster für Zylinderausblendung NR_PAT_SCC und die Trapping Efficiency TE.

Alternativ hierzu kann die Monolithtemperatur T_MON auch direkt gemessen werden mittels des Temperatursensors 34.

Übersteigt die Katalysator-Monolithtemperatur T MON den Schwellenwert T_MON_SW, so werden die Sollwerte für Ventilhub und die Ventilüberschneidung VO für das Einlass- und Auslassventil auf die dem Betriebspunkt der Brennkraftmaschine 10 entsprechenden Standardwerte zurückgenommen, die wieder abhängig vom Betriebsbereich der Brennkraftmaschine, insbesondere abhängig von der Drehzahl N, der zugeführten Luftmasse MAF_KGH und der Kühlmitteltemperatur TCO in der Speichereinrichtung abgelegt sind. Die Verstellung erfolgt kontinuierlich über einen Integrator. Auch die vergrößerte Öffnung der Drosselklappe wird dem jetzigen Betrieb (kein Startbetrieb) entsprechend angepasst (Verfahrensschritt S8).

Das beschriebene Verfahren eignet sich auch dazu, die Temperatur eines NOx-Speicherkatalysator auf die notwendige Temperatur für eine Desulfatisierung anzuheben. Diese Temperatur liegt deutlich höher als die Light- Off-Temperatur und beträgt typischerweise 650-750°C. Bei einer Last der Brennkraftmaschine, die größer ist als Saugervolllast (bei maximalen Ventilhub), muss dabei die bei niedrigen Lasten erforderliche Verringerung des Ventilhubs zur Saugrohrdruckerhöhung entfallen.

**Patentansprüche**

1.  Verfahren zum Aufheizen eines Abgaskatalysators (21) einer Brennkraftmaschine (10), welche aufweist:

    einen Ansaugkanal (11) mit einer darin angeordneten Drosselklappe (16),
    einen Brennraum mit Gaswechselventilen in Form eines Einlass- und Auslassventils,
    einen Abgaskanal (20) mit dem darin angeordneten Abgaskatalysator (21),
    eine Aufladeeinrichtung (25, 26)zum Vorverdichten der dem Brennraum zugeführten Luft
    eine Einrichtung (31) zum Einstellen der Ventilüberschneidung (VO) und des Ventilhubes (VH) der Gaswechselventile,
    ein Einspritzventil zum Einspritzen von Kraftstoff direkt in den Brennraum, und
    eine Einrichtung, die die zu einem homogenen Betrieb der Brennkraftmaschine (10) benötigte einzuspritzende Kraftstoffmenge (MFFF) ermittelt, **dadurch gekennzeichnet, dass**
    bei dem Verfahren nach Erkennen eines Kaltstarts der Brennkraftmaschine (10) die folgenden Maßnahmen ergriffen werden:

    - Schalten auf geringen Venilhub (VH) und Anheben des Saugrohrdruckniveaus durch vollständiges Öffnen der Drosselklappe (16) und Vorverdichten der Luft mittels Aufladung, um ein positives Druckgefälle von der Einlassseite zur Auslassseite der Brennkraftmaschine (10) zu erzeugen,
    - Einstellen der Ventilüberschneidung (VO) der Gaswechselventile, um zumindest einen Teil der von der Aufladeeinrichtung (25, 26) geförderten Luft als Spülluft direkt von der Einlass- zur Auslassseite der Brennkraftmaschine in den Abgaskanal (20) zu fördern, und
    - Einspritzen von Kraftstoff direkt in den Brennraum so, dass der Beginn der Einspritzung nach dem Schileßen des Auslassventils erfolgt.

**2.** Verfahren nach Anspruch 1, **dadurch gekennzeichnet, dass** als Kriterium für einen Kaltstart der Brennkraftmaschine (10) die Kühlmitteltemperatur (TCO) herangezogen wird.

**3.** Verfahren nach Anspruch 1, **dadurch gekennzeichnet, dass** als Kriterium für einen Kaltstart der Brennkraftmaschine (10) die Kühlmitteltemperatur (TCO) und die Abstellzeit der Brennkraftmaschine (10) und/oder die Umgebungstemperatur herangezogen wird.

**4.** Verfahren nach Anspruch 1, **dadurch gekennzeichnet, dass** die Werte für den ventilhub (VH) experimentell ermittelt werden und in einer Speichereinrichtung (24) einer die Brennkraftmaschine (10) regelnden und steuernden Steuerungseinrichtung (17) abgelegt sind.

**5.** Verfahren nach Anspruch 1, **dadurch gekennzeichnet, dass** die Werte für die Ventilüberschneidung (VO) abhängig von Betriebsparametern der Brennkraftmaschine (10) in einer Speichereinrichtung (24) einer die Brennkraftmaschine (10) steuernden Steuerungseinrichtung (17) abgelegt sind.

**6.** Verfahren nach Anspruch 5, **dadurch gekennzeichnet, dass** als Betriebsparametern der Brennkraftmaschine (10) die angesaugte Luftmasse (MAF_KGH), die Drehzahl (N) und die Monolithtemperatur (T_MON) herangezogen wird.

**7.** Verfahren nach Anspruch 1, **dadurch gekennzeichnet, dass** zusätzlich der Zündwinkel (IGA) in Richtung spät verstellt wird.

**Claims**

**1.** Method for heating an exhaust gas catalyst (21) of an internal combustion engine (10), comprising:

an intake duct (11) with a throttle valve (16) arranged therewithin,
a combustion chamber with gas exchange valves in the form of an inlet and outlet valve,
an exhaust line (20) with the exhaust gas catalyst (21) arranged therewithin,
a supercharger device (25, 26) for pre-compressing the air supplied to the combustion chamber,
a device (31) for setting the valve overlap (VO) and valve lift (VH) of the gas exchange valves,
an injection valve for injecting fuel directly into the combustion chamber,
a device that determines the amount of fuel (MFF) requiring to be injected for homogenous operation of the internal combustion engine (10),

**characterised in that**
by means of said method the following measures are taken upon detection of a cold start of the internal combustion engine (10),

- switching to a lower valve lift (VA) and increasing the induction manifold pressure by fully opening the throttle valve (16) and pre-compression of the air by supercharging, in order to generate a positive pressure drop from the inlet side to the outlet side of the internal combustion engine (10),
- setting the valve overlap (VO) of the gas exchange valves in order to deliver at least part of the air supplied by the supercharger device (25, 26) as scavenging air directly from the inlet side to the outlet side of the internal combustion engine into the exhaust line (20), and
- injecting fuel directing into the combustion chamber so that injection begins after the outlet valve is closed.

**2.** Method according to claim 1, **characterised in that** the coolant temperature (TCO) is used as a criterion for a cold start of the internal combustion engine (10).

**3.** Method according to claim 1, **characterised in that** the coolant temperature (TCO) and the shutdown time of the internal combustion engine (10) and/or the ambient temperature are used as a criterion for a cold start of the internal combustion engine (10).

**4.** Method according to claim 1, **characterised in that** the values for the valve lift (VH) are determined experimentally and stored in a storage device (24) of a control device (17) regulating and controlling the internal combustion engine (10) .

**5.** Method according to claim 1, **characterised in that** the values for the valve overlap (VO) are stored in a storage device (24) of a control device (17) controlling the internal combustion engine (10) as a function of operating parameters of the internal combustion engine (10).

**6.** Method according to claim 5, **characterised in that** the aspirated air mass (MAF_KGH), the speed (N) and the monolith temperature (T_MON) are used as operating parameters for the internal combustion engine (10).

**7.** Method according to claim 1, **characterised in that** the ignition angle (IGA) is retarded in addition.

## Revendications

**1.** Procédé pour chauffer un catalyseur (21) des gaz d'échappement d'un moteur à combustion interne (10) qui comprend :

un conduit d'aspiration (11) avec un papillon d'étranglement (16) disposé dans celui-ci,
une chambre de combustion avec des soupapes d'échange de gaz sous forme d'une soupape d'admission et d'échappement,
un conduit de gaz d'échappement (20) avec le catalyseur (21) disposé dans celui-ci,
un dispositif de suralimentation (25, 26) pour la pré-compression de l'air alimenté dans la chambre de combustion,
un dispositif (31) pour le réglage du chevauchement de soupapes (VO) et de la levée de soupapes (VH) des soupapes d'échange de gaz,
une soupape d'injection pour l'injection de carburant directement dans la chambre de combustion, et
un dispositif qui détermine la quantité de carburant (MFFF) à injecter nécessaire pour un fonctionnement homogène du moteur à combustion interne (10), **caractérisé en ce que** avec le procédé, après la détection d'un démarrage à froid du moteur à combustion interne (10), les mesures suivantes sont prises :

commutation sur la petite levée de soupapes (VH) et élévation du niveau de la pression du tuyau d'aspiration par l'ouverture totale du papillon d'étranglement (16) et la pré-compression de l'air par suralimentation pour générer une perte de charge positive entre le côté admission et le côté échappement du moteur à combustion interne (10),
réglage du chevauchement de soupapes (VO) des soupapes d'échange de gaz pour alimenter au moins une partie de l'air alimenté par le dispositif de suralimentation (25, 26) sous forme d'air de balayage directement entre le côté admission et le côté échappement du moteur à combustion interne dans le conduit de gaz d'échappement (20), et
injection de carburant directement dans la chambre de combustion de telle manière que le début de l'injection se produise après la fermeture de la soupape d'échappement.

**2.** Procédé selon la revendication 1, **caractérisé en ce que** la température de l'agent réfrigérant (TCO) est prise comme critère pour un démarrage à froid du moteur à combustion interne (10).

**3.** Procédé selon la revendication 1, **caractérisé en ce que** la température de l'agent réfrigérant (TCO) et le temps d'arrêt du moteur à combustion interne (10) et/ou la température ambiante sont pris comme critères pour un démarrage à froid du moteur à combustion interne (10).

**4.** Procédé selon la revendication 1, **caractérisé en ce que** les valeurs pour la levée de soupapes (VH) sont déterminées expérimentalement et sont stockées dans un dispositif de mémorisation (24) d'un dispositif de commande (17) qui commande le moteur à combustion interne (10) .

**5.** Procédé selon la revendication 1, **caractérisé en ce que** les valeurs pour le chevauchement de soupapes (VO) en fonction de paramètres de fonctionnement du moteur à combustion interne (10) sont stockées dans un dispositif de mémorisation (24) d'un dispositif de commande (17) qui commande le moteur à combustion interne (10).

**6.** Procédé selon la revendication 5, **caractérisé en ce que** la masse d'air aspirée (MAF_KGH), la vitesse de rotation (N) et la température du monolithe (T_MON) sont pris comme paramètres de fonctionnement du moteur à combustion interne (10).

7. Procédé selon la revendication 1, **caractérisé en ce que**, en outre, l'angle d'allumage (IGA) est ajusté dans la direction de retard.

FIG 1

$P_{Einlass}$  31  10  $P_{Auslass}$  21

12  13  11  14  15  25  20

26  16  28

$MFF$  29  30

KST  $\lambda_{EX}$  T_MON

18  19  27

22  34

N

TCO

17  24

NR_PAT
_SCC

VH  TCO_SW

T_MON_SW

23  32  CAM_IN_WUP_SP

CAM_EX_WUP_SP

MAF_KGH

EP 1 576 268 B1

FIG 2

```
                              S0 ─○ Start ○

        S1
         ╲────◇ KAT-Heizen nötig?           nein
              │ TCO_ST>TCO_SW ╲────────────────────┐
              ◇──────────────╱                      │
                     │ ja                           │
    ┌ ─ ─ ─ ─ ─ ─ ─ ─│─ ─                           │
    ¦                 │                             │
    ¦         ┌───────┘    S3                       │
    ¦         ▼            ╲────◇ geeigneter Ventilhub?   nein
    ¦   ┌──────────┐            ◇──────────╱──────────┐   │
    ¦   │ DK auf,  │                  │ ja            │   │
    ¦   │Lader aktiv│                 │               ▼   │
    ¦   └──────────┘                  │        ┌──────────┐
    ¦         │  S4                    │   S5 ─│ Sollwerte │
    ¦         │                        │        │ einstellen│
    ¦         └────────────┬───────────┼────────└──────────┘
    ¦                      │           │               
    ¦                      │           │          S2
    ¦  ┌ ─ ─ ─ ─ ┐         ▼           │           ╲
    ¦  ¦Zündwinkel¦  ┌────────────────────┐   ┌──────────┐
    ¦  ¦IGA nach  ¦  │Ventilüberschneidung│   │ keine KAT-│
    ¦  ¦  spät    ¦  │ VO einstellen      │─S6│Heizmaßnahmen│
    ¦  └ ─ ─ ─ ─ ┘  │ CAM_EX_WUP_SP      │   └──────────┘
    ¦      │ S9     │ CAM_IN_WUP_SP      │        │
    ¦      └ ─ ─ ─ ─└────────────────────┘        │
    └ ─ ─ ─ ─ ─ ─ ─ ─ ─ ─ ─ ▼                    │
                      ╲────◇ T_MON >T_MON_SW  nein│
                           ◇──────────╱──────┐    │
                                │ ja    S7    │    │
                                ▼             │    │
                      ┌──────────────────┐   │    │
                      │ Standardwerte für│─S8│    │
                      │Normalbetrieb einstellen│  │
                      └──────────────────┘        │
                                │◄───────────────┘
                                ▼
                             ○ Ende ○
```